# EUROPEAN PATENT APPLICATION

(11) **EP 1 577 691 A1**
(43) Date of publication of application: **21.09.2005**
(21) Application number: 05005622.5
(22) Date of filing: 15.03.2005
(51) Int. Cl.: G02B 6/44

(54) **Improved optical fiber cable coatings**

(30) Priority: 17.03.2004 US 802959 P
(71) Applicant: Furukawa Electric North America Inc., Norcross, GA 30071 (US)
(72) Inventor: Konstadinidis, Kariofilis, Decatur, GA 30033 (US); Ly, Heng, Stone Mountain, GA 30083 (US); Sizemore, Jorg, Duluth, GA 30096 (US); Taylor, Kenneth L., Lawrenceville, GA 30043 (US)
(74) Representative: Schoppe, Fritz

(57) **Abstract**

Dual coated optical fiber cables are optimized for air blown installation. The elastic properties of both coatings are controlled within a desired range over the full range of potential installation temperatures, e.g. 0-45 °C. The material of the inner coating has a T_{g} below -15 °C, and preferably below -25 °C,and the material of the outer coating has a T_{g} above 60 °C, and preferably above 75 °C.

## Description

### Field of the Invention

This invention relates to optical fiber cable and to polymer coating materials for optical fiber cable. More specifically it relates to optical fiber cable used in microduct installations and adapted for air blown installation.

### Background of the Invention

Optical fiber used commercially is manufactured by drawing a glass fiber from a glass preform and applying coating material to the fiber. The coating is applied instantly after draw to prevent contamination or contact of any kind with the nascent fiber surface. The most widely used coating material is a UV curable polymer. Dual coated optical fibers are usually produced by coating the glass fiber with a first (primary) layer of relatively soft polymer and a second (secondary) layer of a higher modulus polymer to provide high strength and abrasion resistance.

The optical fiber, or, typically, several optical fibers are over-coated with a polymer material to form the optical fiber cable. Optical fiber cable used in cables designed for microduct installations require special considerations. This is particularly the case when the microduct installation involves blowing in the optical fiber cable. In an air blown fiber installation, the optical fiber cable is propelled through a pre-installed cable tube by a viscous air flow. Using this technique, the optical fiber cable is mechanically "pushed" into the duct concurrently with a stream of air, with the net force distributed along the cable length rather. Advantages, in addition to simplicity and flexibility of installation, are that fiber breaks or excessive stress are minimized.

In a typical installation, the cable installation route comprises a bundle of individual inner sub-ducts inside a protective outer duct. A variety of duct styles may be used, adapted specifically for use in plenum, riser, general purpose and outdoor applications. The inner sub-ducts may be small, e.g. 0.25 inch diameter, or up to two inches for large, high fiber count, cables. This description will refer to these inner ducts as microducts, and to the assembly of microducts as microduct conduit.

As mentioned, the optical fiber cable that is installed in the microducts may comprise a single optical fiber, or one or more small optical fiber cables, typically with 2-24 optical fibers. In assemblies with, for example, 3-8 optical fibers, the fibers may be arrayed in a regular geometric pattern comprising a tape or ribbon. For high capacity systems, the optical fiber cable may comprise stacked fiber ribbons in a round or oval bundle. See United States Patent Application Serial No. 10/233,719, filed 09/03/2002. In most cases, the optical fiber cable is designed to have physical characteristics that are specifically adapted for installation in microducts, and, in the preferred case, installed using air blown installation.

Success of optical fiber air blown installations depends on several conditions such as: diameter of the microduct cable, diameter of the microduct, friction characteristics of materials of the microduct, air flow rate, air pressure, amount of vertical rise, tube obstructions, tube discontinuities, etc. These parameters relate mostly to the physical design of the microduct and to the nature of the air-blowing tool.

It has been recognized that the properties of the optical fiber cable influence an air blown installation. The focus heretofore has been on the properties of the cable surface. The property most often cited, and accounted for in the design of the cable, is the friction of the cable surface. The known objective is to have a low friction surface to allow the microduct cable to easily slide within the microduct. However, at the same time it is desirable to have sufficient roughness at the sheath surface to provide enough dynamic air drag for the air stream to convey the microduct cable through the microduct. These requirements suggest a delicate design balance for the surface friction of the sheath covering microduct cable. Microduct cable sheath materials are polymers, which typically give very smooth surfaces. Proposals have been made to modify the surface by adding solid particulates to the polymer. See for example, U.S. Patents Nos. 5,533,164; 5,851,450.

Less attention has been directed at the internal characteristics of the material used to form the optical fiber cable. However we have found that these also strongly bear on the success of air blown installations. This is especially the case where the microduct is not a simple straight run, but has turns and other irregularities that may impede the progress of the cable through the duct. For air blown installations, the elastic properties of the optical fiber cable material are especially important. This importance is amplified when the coating forming the cable is a dual coating, i.e. where two cabling materials are used.

### Summary of the Invention

We have recognized the importance of the elastic properties of dual coated optical fiber cables for air blown installations, and also the effect on these properties of temperature. For commercial success, air blown installation methods need to be effective over a broad range of installation temperatures. A recommended range is 0° C to 45 °C. According to the invention the elastic properties of both coatings in the dual coated cable are controlled within a desired range with respect to the full range of potential installation temperatures. The material of the inner cable coating has a T_{g} below ―15 °C, and preferably below ―25 °C. The material of the outer cable coating has a T_{g} above 60 °C, and preferably above 75 °C. In preferred embodiments, the coating materials have narrow transition ranges. This allows a broader flat region in the elasiticity curve to achieve the goals of the invention.

### Brief Description of the Drawing

Fig. 1 is a schematic view of a fiber cable coating apparatus.
Fig. 2 is a schematic plot of elasticity curves for the inner and outer coatings of a dual coated optical fiber cable produced in accordance with the invention;
Fig. 3 is a schematic plot of glass transition temperature, Tg, for the materials used in Fig. 2.

### Detailed Description of the Invention

The following describes cabling optical fibers at high cabling speeds, and wherein the coatings are of good quality, with improved characteristics for air-blown installation. The method used to apply the cabling material in this description is to apply the coating material as a prepolymer, and cure the prepolymer using UV light. Other coating methods are known and may be used. For example, optical fiber cable coatings may be produced using extrusion.

Optical fiber cable may be coated with an inner coating and an outer coating. The dual coatings are applied in tandem or simultaneously (using a two compartment and dual die applicator). In the tandem method, a first coating layer is applied, and cured, and the second coating layer is applied over the cured first layer, and cured. In the simultaneous dual coating arrangement, both coatings are applied in a prepolymer state, and cured simultaneously.

For UV cured cabling materials, the prepolymer materials are UV curable polyacrylates. These polymers are sufficiently transparent to UV curing radiation, i.e., wavelengths typically in the range 200 - 400 nm, to allow full curing at high draw speeds. Other transparent coating materials, such as alkylsubstituted silicones and silsesquioxanes, aliphatic polyacrylates, polymethacrylates and vinyl ethers have also been used as UV cured coatings. See e.g. S. A. Shama, E. S. Poklacki, J. M. Zimmerman "Ultraviolet-curable cationic vinyl ether polyurethane coating compositions" U. S. Patent No. 4,956,198 (1990); S. C. Lapin, A. C. Levy "Vinyl ether based optical fiber coatings" U. S. Patent No. 5,139,872 (1992);P. J. Shustack "Ultraviolet radiation-curable coatings for optical fibers" U. S. Patent No. 5,352,712 (1994). The coating technology using UV curable materials is well developed, especially for optical fibers. Coatings using visible light for curing, i.e. light in the range 400 - 600 nm, may also be used.

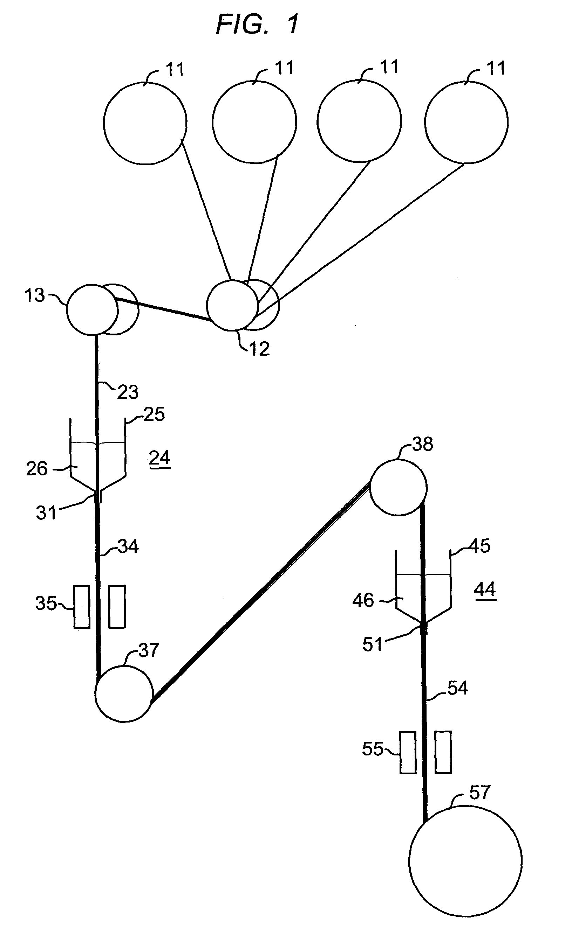

Fig. 1 shows a schematic representation of a cabling apparatus for application of a dual cable coating to a plurality of optical fibers. The optical fibers are coated fibers, usually dual coated fiber. This apparatus is a full tandem arrangement where the first and second coating are applied and cured serially in an in-line process. Optical fiber spools 11 are shown which feed four optical fibers onto an organizing reel 12, then reeled into the coating section by guide reel 13. The fibers are shown at 23, and at this point are organized in the configuration desired for the cable. In the arrangement shown, four fibers are used. A typical organization is a ribbon configuration. However, other arrangements may be used, e.g. bundles. The optical fibers are then passed through a coating prepolymer applicator, indicated generally at 24, which has chamber 25 containing the primary coating prepolymer 26. The liquid coated fibers from the first coating chamber exits through die 31. The coated fibers 34 then pass into the curing stage, represented by UV lamps 35.

The optical fiber 34 from the first coating and curing operation is conveyed to the second coating operation by suitable pulleys 37, 38. If desired the two operations may be aligned, thereby reducing the guide pulley requirements between coating stages. Another option is to reel the cable after the first stage onto a drum for storage. This would be useful if differing compositions for the outer coating is intended.

The optical fiber cable then enters the secondary coating stage, which comprises prepolymer applicator, shown generally at 44, prepolymer container 45, and exit die 51. The fiber 54, coated with prepolymer, is exposed to UV curing lamps 55 to cure the secondary coating. While UV coatings are preferred, other kinds of coatings, and curing radiation, may be used where appropriate. The dual coated fiber is reeled onto drum 57. Fig. 1 is a schematic illustration. Commercial apparatus may have several or many more guide and take-up reels. The take-up reels control the speed of the cabling operation. A stepper motor, controlled by a micro-step indexer (not shown), controls the take-up reel.

As is well known, the combination of the first and second dies, and the fluid dynamics of the prepolymers, control the coating thickness. It is desirable that the fiber be centered within the coating cup, and particularly within the exit dies 21 and 41, to maintain concentricity of the fibers and the over-coatings. A commercial apparatus typically has pulleys that control the alignment of the fibers. Hydrodynamic pressures in the two die themselves aid in centering the fibers.

While the apparatus illustrated shows a tandem coating/cure apparatus, the dual cabling materials may be applied using a dual coating applicator. In this embodiment, both prepolymers are applied and cured in the same operation.

Coating materials for optical fiber cables are typically urethanes, acrylates, or urethane-acrylates, with a UV photoinitiator added. With dual coated cables, there is a wide choice available for the materials. In commercial practice both coatings materials may be acrylates.

The coating applicators, 24, 44, are shown open in this schematic, and an open (non-pressurized) applicator cup is a useful option. However, in a typical commercial draw apparatus the applicator cup is closed, with a single opening or entrance die just large enough to allowing passage of the fiber assembly into the cup. A pressure is maintained in the coating fluid. This pressure, e.g. 50-250 psi, aids in reducing bubble formation in the applied coating. Details of a typical coating cup and die are given in U.S. patent 4,374,161 of Geyling *et al.*

Through experience with actual air-blown installations of optical fiber cables with different cabling materials, we discovered that the blowing performance of optical fiber cable depends strongly on the elastic properties of the coating materials, and that performance is improved when the ratio of the elastic modulus E' to the loss modulus E" is high. This ratio is maximized at either end of the glass transition zone. We have also shown that the point where the ratio is maximized should be different for the two coatings used. Given that the installation temperature is the same for both coatings, this requires that the transition regions for the two components of the coating system be separated significantly. The transition for the primary coating desirably occurs below the installation temperature, while the transition for the outer coating should occur above the installation temperature. For typical installations the temperature is between 0 °C and 45 °C. Other ranges may be selected but in general the installation temperature range for design purposes will be at least 20 °C. This means that the glass transition temperature for the two coatings should be separated by at least 20 °C, and more typically at least 45 °C. In practice, with the teachings of the invention now available for the process designer, and with the knowledge that the blowing performance improves when the inner coating is well into the plateau of the rubbery region, and the secondary coating is well into the glassy region, a separation of at least 70 °C is preferred.

In addition to the separation, the absolute values are relevant, i.e. the primary coating should exhibit a glass transition temperature, Tg, below 0 °C, and for the purpose of the invention at least 15 °C below 0 °C, i.e. below ― 15 °C, and the secondary coating should have a glass transition temperature, Tg, above 45 °C, and preferably at least 15°C above 45 °C, i.e. above 60 °C. For the purpose of this description the glass transition temperature, Tg, is the point in the middle of the transition curve.

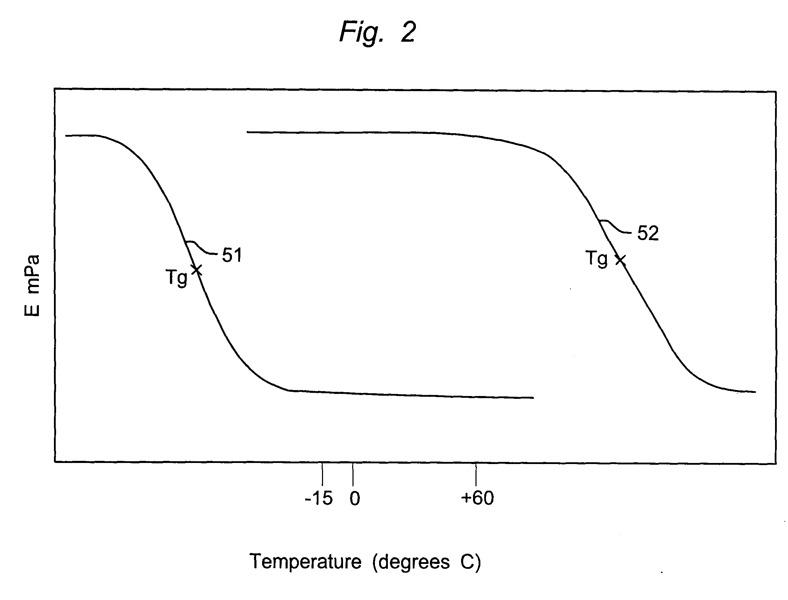

A representative combination of coatings is shown in Fig. 2, where the elasticity E, in Mpa, is plotted vs. temperature. Curve 51 represents the primary coating, and curve 52 represents the secondary coating. The objective of the invention is met where the transitions from rubbery to glassy occur where indicated.

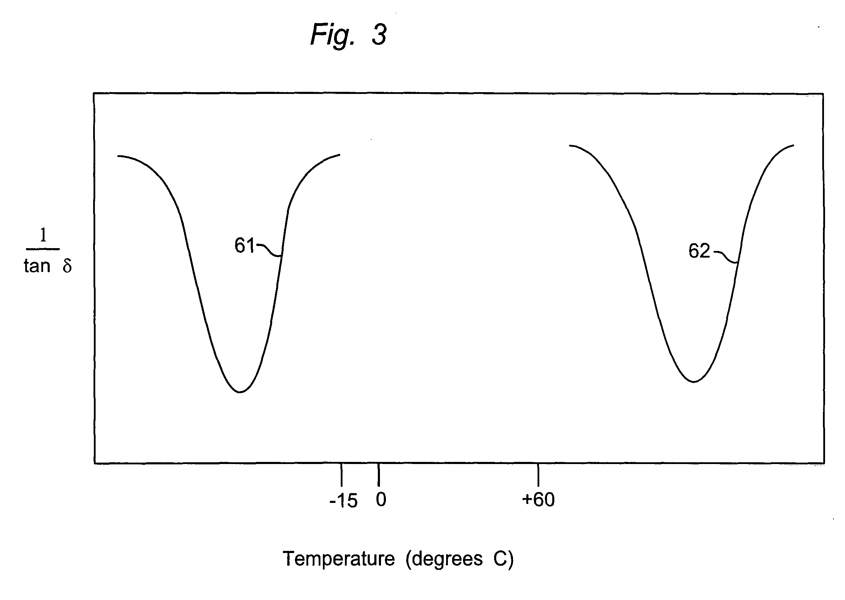

Fig. 3 shows the glass transition temperature, derived from the plot of 1/ tan δ vs. temperature, for the primary coating, 61 and the secondary coating 62.

Examples of coating materials that meet the requirements of the invention are:

| | PRIMARY COATING | SECONDARY COATING |
|---|---|---|
| Example 1 | DSM Desotech DU-1002 | DSM Desotech 850-975 |
| Example 2 | DSM Desotech DU-0001 | DSM Desotech 850-975 |

T_{g} values for these materials are:
DSM Desotech DU-1002: -45 °C
DSM Desotech DU-0001: -18 °C
DSM Desotech 850-975: 80°C

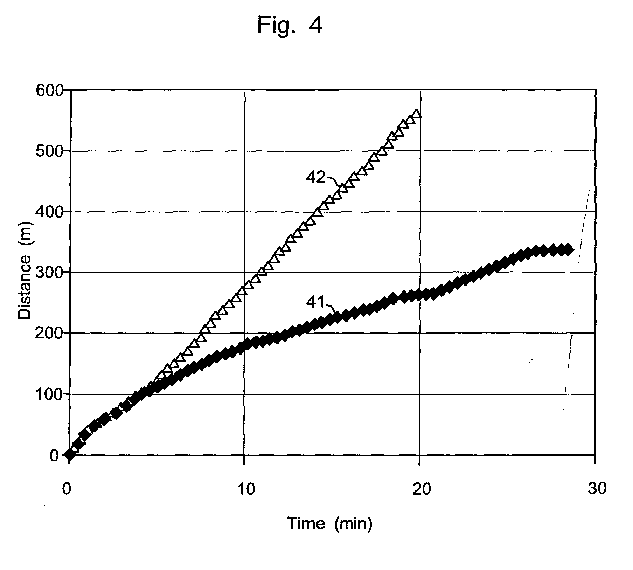

Performance data was acquired for the cable of example 2 above, and compared with a cable coated with the same secondary coating material, but substituting for the primary coating. The cable was a four-fiber cable coated with primary and secondary coatings. The coating material substituted for DSM Desotech DU-0001 was 9D7-544, which has a T_{g} of 30 °C. The installation was a 550 meter route through a 3.5 ID duct wound on a 50 cm drum. The performance data is shown in Fig. 4. Data points represented by the solid squares 41 is for the 9D7-544 overcoated with DSM Desotech 850-975. The data points represented by the open triangles 42 is for the combination of Example 2. The advantage, in terms of speed of installation, obtained by using the cable of example 2 is evident.

In the foregoing description the optical fiber cable is coated with an inner and an outer coating. It should be evident to those skilled in the art that additional coatings may also be used. The coatings are normally applied over coated glass optical fibers. However, the optical fiber may be plastic.

In concluding the detailed description, it should be noted that it will be obvious to those skilled in the art that many variations and modifications may be made to the preferred embodiment without substantial departure from the principles of the present invention. All such variations, modifications and equivalents are intended to be included herein as being within the scope of the present invention, as set forth in the claims.

## Claims

1. An optical fiber cable comprising:
a. at least one coated optical fiber,
b. a first polymer coating applied to the optical fiber,
c. a second polymer coating applied to the first polymer coating,
the invention **characterized in that** the glass transition temperature, Tg, of the first polymer coating and the Tg of the second polymer coating are separated by at least 75 °C.

2. The optical fiber cable of claim 1 wherein the glass transition temperature of the first coating is below -15 °C .

3. The optical fiber cable of claim 2 wherein the glass transition temperature of the second coating is above 60 °C .

4. A method for installing optical fiber in a microduct, wherein the optical fiber is conveyed through the microduct using flowing air, the method **characterized in that** the optical fiber cable comprises:
a. at least one coated optical fiber,
b. a first polymer coating applied to the optical fiber,
c. a second polymer coating applied to the first polymer coating,
the invention **characterized in that** the glass transition temperature, Tg, of the first polymer coating and the Tg of the second polymer coating are separated by at least 75 °C.
